# EUROPEAN PATENT APPLICATION

(11) **EP 3 367 289 A1**
(43) Date of publication of application: **29.08.2018**
(21) Application number: 17158108.5
(22) Date of filing: 27.02.2017
(51) Int. Cl.: G06F 21/60, G06F 21/44

(54) **INTERNET CONNECTION SETUP BETWEEN COMPUTING DEVICES USING BLOCKCHAINS**

(71) Applicant: Nokia Solutions and Networks Oy, 02610 Espoo (FI)
(72) Inventor: LIEKENS, Werner, 2018 Antwerp (BE); PEREZ CAPARROS, David, 2018 Antwerp (BE)
(74) Representative: Nokia Bell Patent Attorneys

(57) **Abstract**

A device, e.g. a first internet-connected computing device, is configured to receive a request to establish a communication link from a second computing device. In response to the request, the first computing device directs a query to a blockchain server via an internet connection to determine if the requested communication link is allowed. On the condition that a response originated by the blockchain server indicates the communication link is allowed, the first commuting device establishes the direct communication link with the second computing device.

## Description

### TECHNICAL FIELD

The present disclosure relates generally to the field of distributed device connectivity, and, more particularly, but not exclusively, to methods and apparatus useful for mediating connections between distributed computing devices.

### BACKGROUND

This section introduces aspects that may be helpful to facilitate a better understanding of the inventions. Accordingly, the statements of this section are to be read in this light and are not to be understood as admissions about what is in the prior art or what is not in the prior art.

Internet-connected computing devices include, among other things, desktop computers, tablets, smart phones, servers and distributed computing devices. Distributed computing devices include such things as thermostats, security cameras, lighting controllers and automobiles. The term "internet-of-things" (IoT) is sometime used to refer to the internetworking of such devices, and the devices themselves as "IoT devices". It is projected that 50 billion such devices may be deployed by 2020, making administration of internet-connected computing devices and IoT devices a topic of urgent concern.

### SUMMARY

The inventors disclose various apparatus and methods that may be beneficially applied to establishing direct connections between computing devices. While such embodiments may be expected to provide improvements in performance and/or reduction of cost of relative to conventional approaches, no particular result is a requirement of the present invention unless explicitly recited in a particular claim.

The disclosure provides a novel way to administer direct connections between computing devices that, among other things, advantageously decentralizes the storage of parameters that allow connections between specific devices, e.g. using blockchains. Various embodiments may be expected to be relatively insensitive to internet disruptions, may reduce administrative bottlenecks, and may reduce inherent risks of centralized administration.

In one embodiment, a device, e.g. a computing device, includes a processor and a memory. The memory contains instructions that when executed configure the processor to receive a request to establish a communication link. The processor is further configured by the instructions to, in response to the request, direct a query to a blockchain server to determine if the communication link is allowed. The processor is further configured to establish the communication link only on the condition that the communication link is allowed.

In various embodiments the processor and memory are components of an IoT device, e.g a security camera, climate control component, residential or commercial lighting controller, an alarm sensor or an automobile. In some embodiments the processor and memory are components of a gateway that acts on behalf of an internet-connected computing device. In some embodiments the processor is configured to block only a portion of internet connectivity of the communication link in response to a qualified allowance received from the blockchain server.

In some embodiments the blockchain server determines if the communication link is permitted by use of a blockchain ledger that includes multiple entries for the computing device and a requesting device, wherein each of the multiple entries is based on a different type of identifier of the computing device and the requesting device. In some embodiments the blockchain server determines if the communication link is permitted by use of a blockchain ledger that includes a smart contract outcome for the computing device and a requesting device, the smart contract outcome including one of the designators "allowed", "disallowed", and "forward", or equivalents, with respect to the requested communication link. In some embodiments the processor is configured to operate as a bridge between a requesting computing device and a remote computing device on the condition that a response from the blockchain server includes a designation to forward communication from the requesting computing device to the remote computing device.

Other embodiments include methods, e.g. of manufacturing a computing device according to any of the preceding embodiments. Still other embodiments provide a storage medium readable by a processor on which is stored instructions that when executed configure the processor to implement any of such methods.

Another embodiment provides a blockchain server that includes a processor and a memory. The memory contains instructions that when executed configure the processor to receive an inquiry from a first computing device to determine if a communication link between the first computing device and a second computing device is allowed. The request includes a first identifier of the first computing device and a second identifier of the second computing device. The processor uses a block chain ledger to determine an outcome indicative of whether the communication link is allowed or disallowed, and directs the outcome to the first computing device.

In some embodiments the blockchain ledger includes multiple entries corresponding to the first and second computing devices and having a same outcome. Each of the multiple entries including an identifier of the first computing device and an identifier of the second computing device, wherein the type of identifier is different for each of the multiple entries. In some embodiments, in the event that the outcome indicates the communication link is allowed, the outcome additionally includes a qualified allowance of internet connectivity between the first and second computing devices.

### BRIEF DESCRIPTION OF THE DRAWINGS

A more complete understanding of various embodiments may be obtained by reference to the following detailed description when taken in conjunction with the accompanying drawings wherein:
FIG. 1 illustrates aspects of connectivity among internet-connected computing devices, and between the computing devices and a number of peer devices that act as blockchain servers;
FIG. 2 illustrates a simplified block diagram of an example computing device, e.g. processor, memory and transceiver;
FIG. 3 illustrates an example blockchain ledger and entry in the ledger that specifies whether a direct connection between two specific computing devices is permitted;
FIG. 4 illustrates an embodiment of a method, e.g. by which a first computing device determines whether to accept a request from a second computing device to establish a direct communication link; and
FIG. 5 illustrates aspects of establishing a communication link between two computing devices via an intermediary device.

### DETAILED DESCRIPTION

Various embodiments are now described with reference to the drawings, wherein like reference numerals are used to refer to like elements throughout. In the following description, for purposes of explanation, numerous specific details are set forth in order to provide a thorough understanding of one or more embodiments. It may be evident, however, that such embodiment(s) may be practiced without these specific details. In other instances, well-known structures and devices are shown in block diagram form in order to facilitate describing one or more embodiments.

The number of internet-connected computing devices continues to increase rapidly, due in part to the proliferation of inexpensive processors, smart phones and tablets, cloud computing, and data centers, as well as so-called "internet-of-things" (IoT) devices. The connections between computing devices requires administrative overhead, including arbitrating connections between various ones of the computing devices. In some cases, a request for a connection received by one device from another device should be granted, while in others the request should be denied, e.g. for reasons of security, privacy or data ownership.

IoT devices are expected to be a particularly strong contributor to the increase of device connectivity. As used herein, "IoT device" or other similar term, refers to an electronic device capable of collecting and/or exchanging data with another similarly configured electronic device, and capable of being sensed and/or controlled remotely by such other similarly configured electronic device via existing network infrastructure. Nonlimiting examples of IoT devices include security cameras, climate control components, residential or commercial lighting controllers, alarm sensors, inventory-control devices and automobiles. While some IoT devices may include only a minimum necessary complexity to implement a design task, e.g. motion sensing and communication, other IoT devices may include significant added capability, e.g. feedback and control, display and threat evaluation. Furthermore, the advent of the "cloud computing" paradigm has led to an increase of distributed computing and remote data storage, both of which increase the number of servers and storage nodes that form connections with other devices via the internet.

This disclosure addressed the subject of, among other things, forming a communication link between distributed computing devices. In a virtual machine context, this might include the establishment of links between a client device and a processing server, and between the processing server and a data storage server. In the contact of IoT, such connection might be physically local or remote. Continuing the example of the home climate control system, a system within a residential or commercial structure may employ physically local distributed temperature and/or relative humidity sensors that communicate with a central control unit. The central control unit might then be connected to a physically remote server such as a monitoring service. It may be desirable to mediate the connections formed between computing devices to ensure only allowed connections are established, e.g. to provide a barrier to malicious actors. Furthermore it may be desirable that the computing devices are able to establish a communications link independent of a centralized entity, such as a software-defined networking (SDN) controller or manufacturer server, for example to distribute the load of servicing connection requests and/or so that a manufacturer of such computing devices is not required to directly provide connection mediation services for the entire operating life of the devices.

Various embodiments described herein and otherwise within the scope of the disclosure use a blockchain as a global, distributed, trusted ledger with entries that indicate whether a connection between given computing devices is allowed or not. An entry in the ledger may also contain terms and conditions implemented in ruled or software (e.g. a smart contract) that can be used to grant or block the connection between computing devices. In some embodiments, when a first computing device wants to establish a connection with a second computing device, the first device first sends a connection request to the second computing device that includes an identifier of that device. The second computing device may check against the trusted ledger to determine whether the connection is allowed or not, e.g. by providing as arguments the identifier of the first computing device as well as an identifier of the second computing device. Connection is established or blocked according to the response received from the ledger. In some embodiments the second computing device receives a contract result that indicates the connection to the first computing device is to be forwarded to a third computing device. In such embodiments, the second computing device may operate as a bridge device to route data between the first and third computing devices.

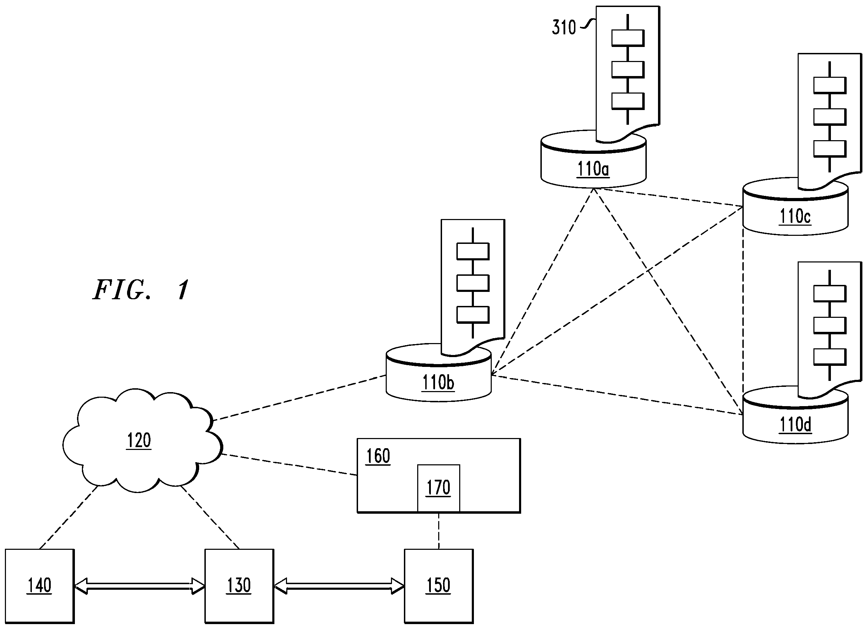

Turning to FIG. 1, various components are shown that interact according to various embodiments. A number of blockchain servers 110a, 110b, 110c, 110d is shown in a blockchain network, sometimes collectively referred to as blockchain servers 110. Each server may include a processor and a memory that contains instructions that configure the processor to implement various embodiments consistent with the disclosure. Each of the servers 110 may run a blockchain client. A blockchain client may be, e.g., a background software routine that listens for blockchain queries, and services such queries by accessing a blockchain and responding accordingly. Each blockchain server 110 maintains a copy of a blockchain ledger 310, described more fully below. In some cases, as illustrated, it may be advantageous to have at least four blockchain servers 110 in the blockchain network, e.g. to ensure robustness against inaccessibility of one or more of the blockchain servers at any particular instant. The blockchain servers 110 operate, at least with respect to the blockchain ledger 310, as peers. In this context, this means the servers 110 exchange updates to their local copy of the ledger 310, such that, after sufficient (typically short) time, each of the servers 110 has a nominally identical copy of the ledger 310. Any of the servers 110 may communicate with any of the other servers 110, e.g. via an internet connection. The peers may also communicate with other computing devices via a connection to the broader internet, represented symbolically as a cloud 120.

Those skilled in the pertinent art will appreciate that a blockchain is a distributed database that maintains a continuously growing list of ordered records called blocks. Each block contains a timestamp and a link to a previous block. By design, blockchains are inherently resistant to modification of the data, in that once recorded, the data in a block cannot be altered retroactively. Blockchains are an open, distributed ledger that can record transactions between two parties efficiently and in a verifiable and permanent way. Blockchains are secure by design and are an example of a distributed computing system with high byzantine fault tolerance. Decentralized consensus can therefore be achieved with a blockchain. This makes blockchains suitable for the recording of events, medical records, and other records management activities, identity management, transaction processing, and proving provenance. (*See, e.g.* Blockchain (database), https://en.wikipedia.org/w/index.php?title=Blockchain_(database)&oldid=765768827 (last visited 16 February 2017)).

An internet-connected computing device 130, e.g. an IoT device, a server or a storage node, may communicate via the cloud 120 with other computing devices connected to the internet, and thereby communicate with one or more of the servers 110. By internet-connected, it is meant that the computing device 130 is configured by any necessary hardware and/or software to direct appropriately formatted data to other devices connected to the internet, and to receive appropriately formatted data from such other devices. For the purpose of the immediate discussion, we assume that a (second) computing device 140 wishes to establish a communication link with the (first) computing device 130. Such a connection may be transient, e.g. such as a security key connection to an automated teller, or quasi-static, such as a connection between a remote temperature sensor and a climate controller, or between components of a virtual machine. It is further assumed, for the purpose of this discussion, that the computing device 130 has no pre-existing security relationship with the second computing device 140, or at least has no memory of such a relationship.

In some conventional implementations, the first computing device 130 and the second computing 140 may be able to determine the existence of a trusted relationship by referring to a centralized server, e.g. a server maintained by a manufacturer of the computing device 130 and the computing device 140. Referring to the previous example of the climate control system, a manufacturer of a climate controller, e.g. the computing device 130, and a remote temperature monitor, e.g. the computing device 140, may maintain a server that provides appropriate credentials on demand to establish a communication link between the devices 130 and 140. In another example, a provider of virtual machine services may conventionally maintain a table of allowed or preferred device connections to implement a particular virtual machine. In the conventional case, however, such a table is not part of a blockchain.

In contrast with such a conventional approach, embodiments consistent with this disclosure provide an autonomous manner of determining a trusted relationship in the sense that a centralized server is not used to mediate connections between computing devices. Each of the devices 130 and 140 may implement a blockchain client. When, e.g., the computing device 140 attempts to establish the communication link with the computing device 130, the computing device 140 may direct a message to the computing device 130 requesting the establishment of the link. The message may include a unique device ID of the device 140. The computing device 130, using its blockchain client, may then direct a request to the cloud 120 to determine an appropriate response to the request. The blockchain client may query any one of the servers 110, each of which is equipped by its blockchain client to make such a determination and return the result to the device 130, which may then act based on the result. Additional details of this transaction are described below.

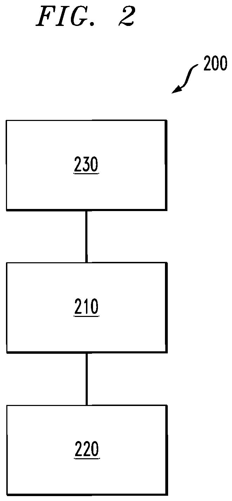

FIG. 2 illustrates a representative block diagram of a nonlimiting embodiment of a computing device 200 that may operate as any one of the devices 130, 140 or 150. A processor 210 is configured to retrieve instructions from a memory 220, e.g. a non-transitory tangible storage medium such as a read-only memory (ROM), random access memory (RAM), etc. Instructions stored on the memory 220 configure the processor 210 to perform functions to implement one or more of the embodiments described herein. The processor 210 is connected to a transceiver 230. The transceiver 230 may be configured to implement any appropriate communications protocol via an antenna (not shown) or via a wired interface to the internet.

Regardless of wired or wireless implementations, the device 200 may further be configured to support the Internet Protocol Suite (commonly referred to as TCP/IP) or the OSI (Open Systems Interconnection) model of internet communication. Each model includes a link layer, an internet layer and a transport layer. The link layer supports a MAC (media access control) sublayer that acts as an interface to the network's physical layer. The internet layer may support one of multiple communications protocols, such as IPv4 and IPv6. The transport layer may support one of multiple transmission protocols, such as TCP (Transmission Control Protocol) and UDP (User Datagram Protocol). In the OSI model the link, internet and transport layers are synonymously referred to as Layers 2, 3 and 4, respectively.

Returning to FIG. 1, the computing device 130 may receive a connection request from the computing device 140 to form a communication link. The connection request may include one or more identifiers of the computing device 140. Such identifiers may include, e.g. a MAC address, an IP address and a device ID. Herein the term "DevID" may refer to any one of these identifiers. In response to the request, the computing device 130 may direct a verification request to a listening blockchain server 110. The verification request may include one or more identifiers of both the computing devices 130 and 140, e.g. MAC address, IP address and DevID. Any one of the pictured blockchain clients 110 may be a listening client 110, and in general it is expected that a large number of such clients may be capable of detecting and responding to the connection verification request, consistent with the blockchain implementation philosophy. The responding blockchain server 110 determines if the requested connection is allowed, with the determination being made by referring to the local copy of the ledger 310.

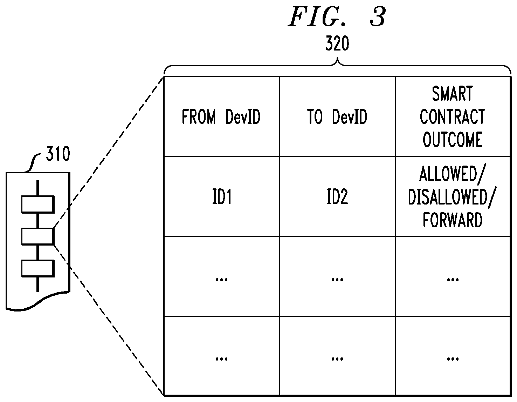

Referring to FIG. 3, the blockchain ledger 310 typically includes a number of blocks (three in the illustrated example), each of which includes a timestamp and a link to the previous block. Each block includes a table that includes an entry for each association between the computing device 130 and other devices which may attempt to form a communication link with the computing device 130. The population of entries in the ledger 310 can be entered by, e.g., a user of the computing device 130 via a user interface to the ledger 310, or by a third party such as an operator or manufacturer of the computing device, or by a provider of a service of which the computing device 130 is a party to, such as a virtual machine. Once created or updated on one blockchain server 110, the ledger 310 propagates to the cloud, e.g. numerous instances of the client 110 accessible via the internet.

The blockchain 310 may have an entry that relates the computing device requesting the connection (computing device 140 in the present example) to the computing device to which the request is directed (computing device 130 in the present example). If such an entry is not present, it may be concluded as a default condition that the requested connection is disallowed. If the entry is present, it may include an identity of the requesting computing device, an identity of the computing device to which the request is directed. The identity may be expressed by any of the identifiers described above. The entry also includes a result termed a "smart contract outcome" without limitation by implication. A smart contract is a set of rules, or an algorithm, that takes as inputs the identifiers of the verifying device, e.g. the device 130, and the requesting device, e.g. the device 140, and determines the outcome based on the rules or algorithm. In some cases, the outcome may be an unconditional result indicating that the connection is allowed or disallowed, for instance if it has been determined that the verifying device and the requesting device are always or never to be allowed to establish a connection. In some cases, the result may be dependent on other conditions, thus forming a conditional smart contract. Such conditions may include, e.g. time of day, account payment status, common ownership or compatibility of the two devices, etc. Whether conditional or unconditional, the smart contract outcome may be returned by the client 110 to the verifying device.

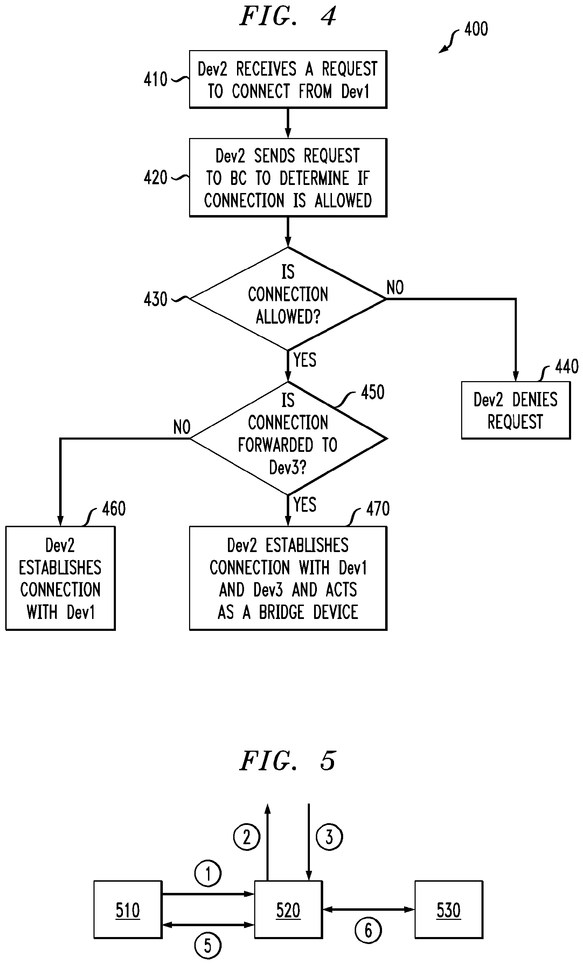

In addition to designating the requested connection to be allowed or disallowed, the smart contract outcome may further designate the communication link is to be forwarded. The following discussion refers to FIG. 5 for illustration, which includes computing devices 510, 520 and 530. In one embodiment the computing device 510 requests in step 1 to establish a communication link with the computing device 520. In step 2 the computing device 520 directs a verification request to a blockchain server (not shown), the request including an identifier of the computing device 510 and an identifier of the computing device 520. In step 3, the blockchain server returns the smart contract outcome for the verification request. For the purpose of the immediate discussion it is assumed that the smart contract outcome indicates the connection is allowed, and further includes a "forward" designation and an identifier of the computing device 530. The computing device 520 may then in step 5 establish a communication link with the computing device 510, and in step 6 establish another communication link with the computing device 530. The computing device 520 may now operate as abridge device to provide a communication link between the computing devices 510 and 530. The described operation may be useful, for example, in situations in which the computing device 530 is out of range of a wireless connection to the internet, but within range of the computing device 520.

Referring again to FIG. 3, in some embodiments a particular combination of computing devices may appear multiple times using different forms of identifiers. For example, the same smart contract may appear in the table 320 in three forms, one using the MAC address of the computing devices as the DevID, one using the IP address of the computing devices as the DevID, and one using the device ID as the DevID. In many cases, the computing devices of such multiple entries are redundant in that the computing devices maybe identified by any one of the identifiers. However, such multiple entries may provide a means to detect and deter "spoofing", in which an illegitimate or malicious computing device attempts to appear as a legitimate computing device.

The smart contract outcome may also include a designation of whether a communication link between the contracting computing devices is to be completely blocked from communicating, or partially limited, and if partially limited then what subset of communication is allowed. An outcome that indicates the communication link is to be partially limited is a referred to as a qualified allowance. For example, in a lowest level of restriction the outcome may specify that one or more transport layer protocols are blocked, e.g. TCP and UDP, which may have the effect of blocking all HTTP and HTTPS communication. In a higher level of restriction the outcome may specify that one or more internet layer protocols are blocked, e.g. IPv4 and IPv6, which may have the additional effect of blocking all ping messages. In a still higher level of restriction the outcome may specify that one or more link layer protocols are blocked, e.g. MAC layer protocols such as Ethernet, DSL and ISDN, effectively preventing all communication between the contracting computing devices. The verifying device then implements the communication link with the requesting device consistent with the smart contract outcome. Those skilled in the pertinent art will appreciate that these examples are not exclusive of other layers and/or protocols that may be used to selectively disable portions of a communication link between contracting computing devices.

FIG. 4 shows a method 400 that illustrates one embodiment of the actions of a computing device, e.g. the device 130, referred to in this example as Dev2, that receives a request to establish a communications link from another computing device, e.g. the computing device 140, referred to this example as Dev1. In a first step 410, Dev2 receives a request from Dev1 to form a direct communications link. In a step 420, the Dev2 directs to a blockchain server 110 via the internet a request to determine the contract status of the connection request. Dev2 may run a blockchain client that has appropriate credentials stored to direct the request to one or more blockchain servers. Moreover, because of the distributed nature of the blockchain paradigm, any one of multiple redundant servers 110 may respond to the inquiry. The responding blockchain server 110 may determine the smart contract outcome and return a result to Dev2 as previously described.

In a decisional step 430, Dev2 determines the appropriate response to the smart contract outcome in the event that the connection is allowed. If the outcome indicates the connection to Dev1 is not allowed, then the method 400 proceeds to step 440 in which the connection request is denied. If the connection is allowed, the method proceeds to another decisional step 450 in which it is determined whether the connection is to be forwarded to another device, e.g. Dev3. If there is no forwarding, the method advances to step 460, in which Dev2 directs a response to Dev1 to establish a communication link. If instead the connection is to be forwarded, the method advances to step 470, in which Dev2 establishes a connection with Dev1 and Dev3 and acts as a communication bridge between them.

Returning to FIG. 1, additionally are shown a computing device 150, a gateway 160 and a blockchain proxy 170. In the following discussion it is assumed without implied limitation that the computing device 150 initiates a request to establish a communication link with the computing device 130. This embodiment may be useful when a computing device, e.g. the computing device 150, is able to form a connection to another computing device, but doesn't have enough processing power or is otherwise not configured to connect to the internet, and/or to evaluate the smart contract outcome. The computing device 150 may direct the connection request to the gateway 160, which then acts on behalf of the computing device 150 to direct the request via the internet to the computing device 130. Alternatively, if a request is directed by another computing device to the computing device 150, the gateway 160 may act to receive the request, and to execute the blockchain inquiry and evaluation on behalf of the computing device 150. The gateway/proxy 160/170 may also generate the device ID for the computing device 150. The operation of the gateway 160 may otherwise be as described previously in the context of the computing devices 130 and 140.

Although multiple embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

It will be further understood that various changes in the details, materials, and arrangements of the parts which have been described and illustrated in order to explain the nature of this invention may be made by those skilled in the art without departing from the scope of the invention as expressed in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments necessarily mutually exclusive of other embodiments. The same applies to the term "implementation."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The embodiments covered by the claims in this application are limited to embodiments that (1) are enabled by this specification and (2) correspond to statutory subject matter. Non-enabled embodiments and embodiments that correspond to non-statutory subject matter are explicitly disclaimed even if they formally fall within the scope of the claims.

The description and drawings merely illustrate the principles of the invention. It will thus be appreciated that those of ordinary skill in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A computing device, comprising:
a processor;
a memory containing instructions that when executed configure the processor to:
receive a request to establish a communication link;
in response to said request, to direct a query to a blockchain server to determine if said communication link is allowed;
on the condition that the communication link is allowed, to establish said communication link.

2. The computing device of Claim 1, wherein said processor and memory are components of an Internet-of-Things device.

3. The computing device of Claim 1, wherein said processor and memory are components of a gateway that acts on behalf of an internet-connected computing device.

4. The computing device of Claim 1, wherein the processor is configured to, in response to a qualified allowance received from said blockchain server, block only a portion of internet connectivity of said communication link.

5. The computing device of Claim 1, wherein said blockchain server determines if said communication link is permitted by use of a blockchain ledger that includes multiple entries for the computing device and a requesting device, wherein each of said multiple entries is based on a different type of identifier of said computing device and said requesting device.

6. The computing device of Claim 1, wherein said blockchain server determines if said communication link is permitted by use of a blockchain ledger that includes a smart contract outcome for said computing device and a requesting device, said smart contract outcome including one of allowed, disallowed, and forward with respect to said requested communication link.

7. The computing device of Claim 1, wherein said processor is configured to operate as a bridge between a requesting computing device and a remote computing device on the condition that a response from said blockchain server includes a designation to forward communication from the requesting computing device to the remote computing device.

8. A blockchain server, comprising:
a processor;
a memory containing instructions that when executed configure the processor to:
receive an query from a first computing device to determine if a communication link between said first computing device and a second computing device is allowed, the request including a first identifier of the first computing device and a second identifier of the second computing device;
use a block chain ledger to determine an outcome indicative of whether said communication link is allowed or disallowed; and
direct said outcome to said first computing device.

9. The blockchain server of Claim 8, wherein said blockchain ledger includes multiple entries corresponding to said first and second computing devices and having a same outcome, each of said multiple entries including an identifier of said first computing device and an identifier of said second computing device, wherein the type of identifier is different for each of the multiple entries.

10. The blockchain server of Claim 8, wherein in the event that said outcome indicates said communication link is allowed, said outcome additionally includes a partial limitation of internet connectivity between said first and second computing devices.

11. A method, comprising:
configuring a computing device to receive a request to establish a direct communication link with a computing device;
configuring said computing device to direct, in response to said request, a query to a blockchain server to determine if said communication link is permitted;
configuring said computing device to establish said direct communication link on the condition that the communication link is permitted.

12. The method of Claim 11, wherein said computing device comprises a gateway that acts on behalf of another computing device.

13. The method of Claim 11, wherein said computing device is configured to operate as a bridge between a requesting computing device and a remote computing device on the condition that a response from said blockchain server includes a designation to forward communication from the requesting computing device to the remote computing device.

14. The method of Claim 11, wherein said computing device is configured to establish a partially limited communication link on the condition that said blockchain server returns a qualified allowance.

15. A storage medium readable by a processor on which is stored instructions that when executed configure the processor to implement any of the methods as set forth in Claims 11-14.
